# FASCICULE DE BREVET EUROPEEN

(11) **EP 0 399 895 B1**
(45) Date de publication et mention de la délivrance du brevet: **12.10.1994**
(21) Numéro de dépôt: 90401358.8
(22) Date de dépôt: 22.05.1990
(51) Int. Cl.: B60R 16/02, B60K 37/06

(54) **Platine de servitude associée au tableau de bord d'un véhicule automobile**
Hilfsplatine am Armaturenbrett eines Kraftfahrzeugs
Help panel at vehicle instrument board

(30) Priorité: 23.05.1989 FR 8906733; 06.04.1990 FR 9004435
(43) Date de publication de la demande: 28.11.1990
(73) Titulaire: VALEO ELECTRONIQUE, 94000 Creteil (FR)
(72) Inventeur: Chretien, Louis, F-92500 Rueil Malmaison (FR); Lagier, Daniel, F-92000 Nanterre (FR)
(74) Mandataire: Gamonal, Didier

(56) Documents cités:
- DE-A- 2 357 496
- DE-A- 2 805 583
- FR-A- 2 421 750
- FR-A- 2 442 739
- GB-A- 2 023 938
- GB-A- 2 152 289

## Description

La présente invention concerne d'une manière générale les platines de servitude associées au tableau de bord d'un véhicule automobile selon le préambule de la revendication 1 (voir GB-A-2 152 289).

Ainsi qu'on le sait de telles platines portent des composants électriques, par exemple, des relais, des lampes, la centrale de clignotant du véhicule, des fusibles ou analogues.

Pour ce faire ces composants sont reliés entre eux par un réseau d'interconnexion électrique, la platine présentant une zone d'alimentation, pour alimentation dudit réseau, et portant celui-ci.

Dans un véhicule automobile le conducteur a à sa disposition un certain nombre de commandes faisant partie d'au moins un commutateur électrique indépendant fixé mécaniquement sur un support distinct de la platine. Ce commutateur est connecté par des câbles au faisceau du véhicule ainsi qu'à ladite platine. Il peut s'agir par exemple d'un combiné code-phare-clignotants à la disposition de l'utilisateur, ledit combiné étant, dans certaines applications, pourvu de lampes témoin.

Des interrupteurs peuvent être également placés et fixés sur la planche de bord du véhicule, par exemple l'interrupteur de signal de détresse (warning), lesdits interrupteurs étant également connectés au faisceau du véhicule ainsi qu'à ladite platine. Il résulte de tout cela des chutes de tension et un montage compliqué, cette conception impliquant des opérations d'assemblages mécaniques et de raccordements électriques. Ces raccordements électriques imposent un certain nombre de points de liaison, de la platine vers les alimentations ou les éléments commandés, de la platine vers les appareils, des appareils vers les alimentations ou éléments commandés.

En outre, des liaisons inter-appareils sont nécessaires.

La présente invention a pour objet de pallier ces inconvénients de manière simple et économique et donc de réduire le nombre de points de liaison, le nombre de défauts possibles ainsi que de diminuer les pertes en ligne.

Suivant l'invention ce problème est résolu selon la partie caractérisante de la revendication 1.

Grâce à l'invention il peut être créé un module intégré platine de servitude-commutation et le réseau d'interconnexion constitue également le réseau pour le commutateur en sorte que les chutes de tension sont diminuées et que le montage est simple et économique. Ainsi le nombre de raccordements électriques est réduit et centralisé.

On appréciera que la platine de servitude supporte mécaniquement les éléments de commutation et que les contacts électriques des appareils de commutation ou interrupteurs sont effectués directement sur des éléments conducteurs de la platine.

A cet effet, leurs formes sont adaptées et positionnées selon la situation prévue par le style pour un véhicule déterminé. Les autres éléments (relais, centrales, fusibles) peuvent être raccordés électriquement, de manière conventionnelle par embrochage, ou autre. Cette conception permet également, lorsque le réseau d'interconnexion est constitué d'une ou plusieurs plaques métalliques, de réaliser sur la ou les plaques de connexion les languettes de raccordement au faisceau du véhicule. Les boîtiers de ces languettes sont obtenues par les pièces d'habillage et de protection de la platine (surmoulage ou autre).

Ainsi il est possible d'intégrer la ou les lampes témoin associées au commutateur directement dans ledit module, ce qui facilite le montage et le démontage desdites lampes et simplifie encore les interconnexions.

L'invention a donc comme avantage, d'avoir un ensemble complet (ou module intégré), assemblé, testé, prêt à être monté sur véhicule.

Suivant une caractéristique importante de l'invention, une platine de servitude du type sus-indiqué est caractérisée en ce que la zone de commutation comporte une partie fixe reliée à au moins un support d'alimentation, portant un circuit électrique d'alimentation d'au moins un commutateur, par une charnière appartenant au réseau d'interconnexion.

Grâce à ceci la standardisation du module intégré est accrue et il est possible d'incliner plus ou moins le support d'alimentation du commutateur, afin que celui-ci ait une inclinaison adéquate, selon le véhicule concerné, permettant de créer une zone de dégagement déterminée entre le volant et le commutateur.

C'est donc le commutateur du véhicule concerné qui détermine l'orientation de son support d'alimentation standard pour plusieurs véhicules.

Suivant une autre caractéristique, la partie mécanique et d'établissement des contacts du commutateur est contenue dans un boîtier rapporté sur ledit support.

Ainsi la partie mécanique du commutateur peut être stylisée et être dissociée de sa partie électrique d'alimentation (ou partie de connexion).

Suivant une autre caractéristique, des moyens de maintien et de prépositionnement relient le commutateur à la platine de servitude.

Ces moyens peuvent consister par exemple en un habillage stylisé, le support d'alimentation formant alors également le support du commutateur.

Grâce à cette disposition, la charnière est maintenue et la position du commutateur est figée.

La description en annexe illustre l'invention en référence aux dessins annexés dans lesquels :
- la figure 1 représente une vue schématique en coupe du module intégré selon l'invention ;
- la figure 2 est une vue en perspective du module intégré selon l'invention, pour un deuxième exemple de réalisation ;
- la figure 3 est une vue analogue à la figure 2, pour un troisième exemple de réalisation ;
- la figure 4 est une vue partielle en perspective de la zone de commutation, pour un quatrième exemple de réalisation ;
- la figure 5 est une vue partielle en perspective de la zone des fusibles avant et après découpe de la connexion du fusible ;
- la figure 6 est une vue analogue à la figure 2, pour encore un autre mode de réalisation.

La platine de servitude 1 associée au tableau de bord d'un véhicule automobile appartient selon l'invention à un module intégré 2 platine de servitude-commutation. Cette platine 1 en matière isolante porte par exemple par surmoulage un réseau de connexion 11.

Plus précisément le module 2 comporte succesivement à l'intérieur d'un boîtier 3, une première zone de commutation 4, la platine de servitude 1 formant une deuxième zone, et une zone d'alimentation 5 formant une troisième zone. Ici le boîtier 3 est en matière plastique isolante et comporte deux parties à savoir un fond recouvert par un couvercle pour réception d'un réseau d'interconnexion électrique 11.

La platine 1 est solidaire du boîtier 3 et est connectée à au moins un commutateur.

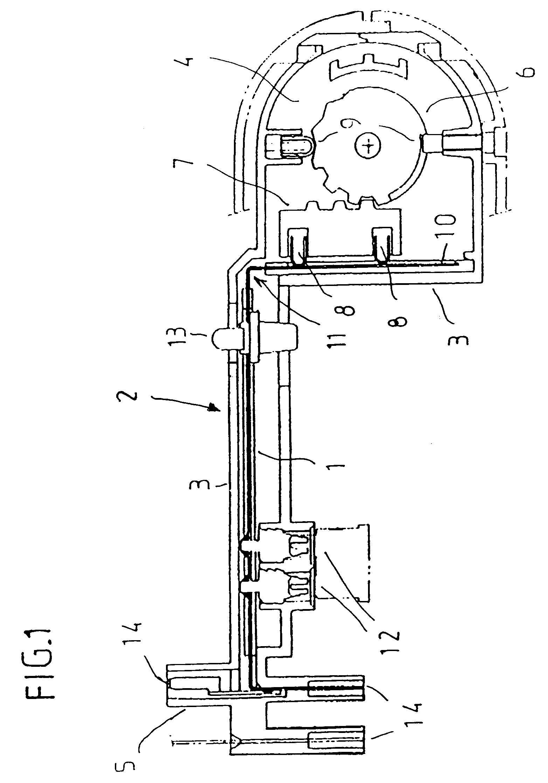

A la figure 1 dans la zone 4 est disposé un commmutateur avec une roue dentée 6 entraînant un coulisseau denté 7 doté de plots de contact 8, pour coopération avec des pistes 10 électriques appartenant au réseau d'interconnexion 11.

Ici les pistes 10 prolongent le réseau 11, solidaire de la platine 1, en faisant ici un angle de 90° par rapport à celui-ci. Le commutateur coopère donc directement avec le réseau 11 de la platine 1 conformée à cet effet et son réseau est intégré audit réseau 11, son alimentation étant réalisée à partir de la zone 5.

Le boîtier 3 porte également des moyens d'indexage 9 pour la roue 6, c'est-à-dire la partie mécanique du commutateur.

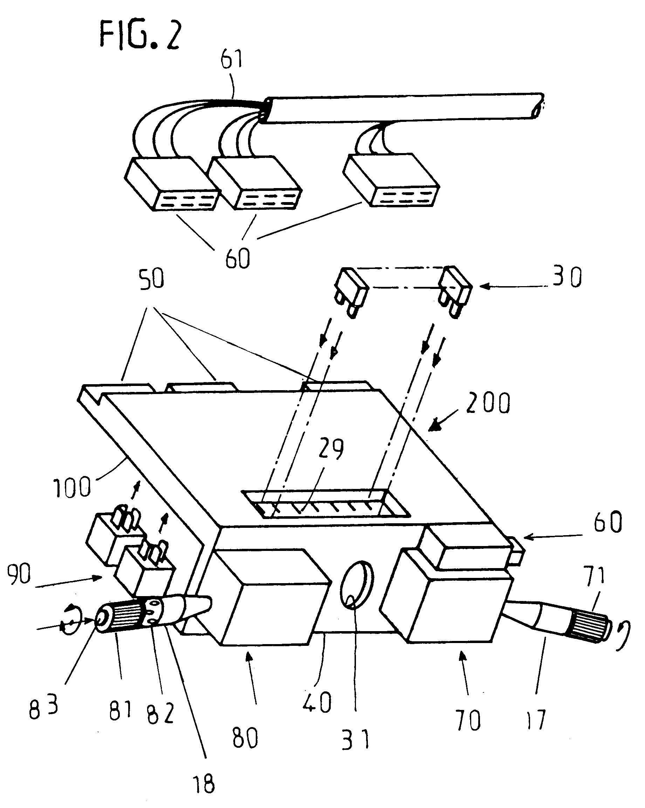

Ce commutateur peut être par exemple le combiné code-phare-clignotants à la disposition du conducteur (figure 2).

La platine 1 porte notamment, d'un côté et de l'autre de son plan, des relais, une centrale de clignotants, des fusibles et des lampes témoin. Par simplicité tous ces composants électriques sont désignés par les références 12 et 13 dans cette figure.

Tous ces composants sont reliés au réseau d'interconnexion 11.

Le réseau 11 peut consister en un circuit imprimé mais ici avantageusement il consiste en un circuit métallique conducteur prédécoupé, par exemple à la presse, monté dans le boîtier 3 en matière isolante. Ce réseau 11 peut comporter selon les applications une ou plusieurs plaques, sachant qu'une commande par multiplexage est favorable à la création d'une seule plaque.

Ici le réseau 11 comporte des pattes, des fiches et des languettes élastiques ou analogues pour le montage des composants électriques.

Ce réseau 11 se termine dans la zone 5 par des fiches 14 d'entrée et de sortie rabattues à 90° et appartenant à un dispositif de connexion.

On appréciera la compacité de l'ensemble et la réalisation économique du module.

Il peut être tiré parti de la disposition selon l'invention pour le montage d'au moins une lampe témoin, ou une autre fonction, associée au commutateur.

A la figure 1 on a représenté en 13 une lampe témoin, le circuit en métal prédécoupé 11 comportant alors des pattes pour montage de ladite lampe. Ici le circuit 11 en dehors de la platine 1 est pris en sandwich dans le boîtier 3 en étant relié à celui-ci de manière classique par des saillies par exemple par la méthode de sertissage par ultra-sons. En variante il peut être surmoulé dans le boîtier dans la zone 4.

La lampe témoin 13 peut faire saillie par rapport à la partie haute du boîtier 3, en sorte qu'elle est facilement démontable et que les connexions sont simplifiées. Bien entendu cette lampe 13 peut être alimentée à partir de barrettes.

En effet cette lampe témoin n'a pas besoin d'être intégrée au tableau de bord ou au combiné.

On appréciera que le module 2 est esthétique.

Bien entendu (figure 2) le module 200 peut comporter plusieurs commutateurs 70,80 et avantageusement il peut être monté sur la colonne de direction du véhicule.

Dans cette figure on voit en 90 des composants sous forme de centrale, relais, ou buzzers, en 30 les fusibles, en 60 un inter-warning et en 80 et 70 respectivement, d'une part, un commutateur éclairage, signalisation, brouillard avant et arrière et, d'autre part, un commutateur essuie-lave vitres avant et arrière.

Le commutateur 80 comporte de manière usuelle une manette 18 avec un bouton 83 pour la commande de l'avertisseur sonore, une bague 81 pour la sélection de l'éclairage et une bague 82 pour la commande des feux de brouillard avant et arrière.

Le commutateur 70 présente une manette 17 avec une bague de réglage 71.

La platine de servitude 100 appartient à un module intégré 200 comportant une zone de commutation 40, ici la face avant de la platine de servitude, une zone d'alimentation avec des connecteurs 50 et la platine de servitude 100 elle-même. On voit en 61 le faisceau du véhicule avec en 60 les connecteurs femelles destinés à coopérer avec les connecteurs mâles 50, disposés dans le plan de la platine 100.

On notera que les boîtiers des connecteurs 50 sont venus de moulage avec la platine 100 et que les languettes de ces connecteurs sont d'un seul tenant avec le réseau d'interconnexion, dont on voit la figure 2 en 29 la partie destinée à recevoir les fusibles 30.

La face 40 est dotée centralement en 31 d'une ouverture (ici un trou), pour le passage de la colonne de direction.

Ici les commutateurs 70 et 80 sont montés de part et d'autre de l'ouverture 31, mais il peut en être autrement.

Comme explicité ci-dessus, le réseau d'interconnexion de la platine est réalisé ici sous forme d'un circuit métallique conducteur prédécoupé, par exemple à la presse, monté dans un boîtier en matière isolante.

Ce réseau peut être monté par surmoulage dans le boîtier avantageusement en deux parties ou être maintenu par des saillies de celui-ci.

Ce réseau fixe s'étend des connecteurs 50 à la zone 40. Il est conformé en fonction notamment des composants, qu'il est susceptible de recevoir et peut comporter une ou plusieurs plaques.

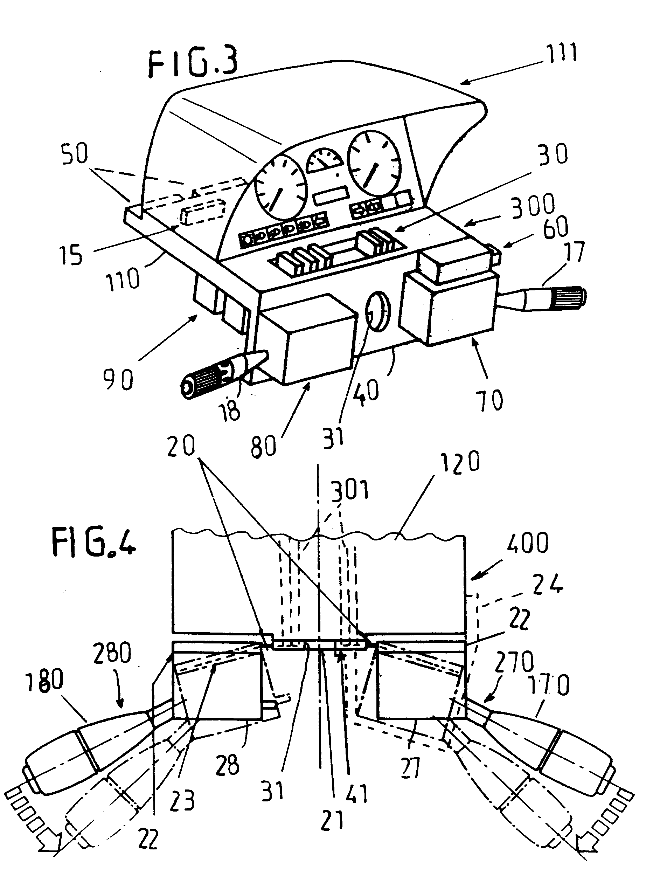

En variante (figure 3) la platine 110 peut porter également le tableau de bord 111 du véhicule. Pour ce faire la platine 110 porte un ou plusieurs connecteurs 15 de raccordement au tableau de bord 111 stylisé en fonction du véhicule et rapporté en final de manière adéquate sur le module 300.

En variante (figure 4) une platine de servitude 120 du type sus-indiqué est caractérisée en ce que la zone de commutation 41 comporte une partie fixe 21 reliée à au moins un support d'alimentation 22, portant un circuit électrique d'alimentation d'au moins un commutateur 280,270, par une charnière 20 appartenant au réseau d'interconnexion 301.

Ce support d'alimentation 22 consiste en une plaque de circuit électrique d'alimentation et de support. Ladite plaque supportant son commutateur associé et portant le réseau de connexion électrique de celui-ci (ou circuit électrique d'alimentation).

Ici la zone de commutation 41 forme la face avant de la platine 120 en s'étendant globalement à 90° par rapport à celle-ci, ladite face avant supportant les commutateurs 280,270, réalisant les connexions électriques et étant constituée ici de trois parties avec une partie fixe 21, dite ici par commodité partie centrale fixe, servant de liaison électrique avec la platine 120, et deux plaques de circuit électrique d'alimentation et de support 22, dénommées ici par commodité volets latéraux, s'étendant de part et d'autre de la partie centrale fixe 21.

La partie centrale 21 est dotée d'un perçage 31 pour le passage de la colonne de direction (non visible) et c'est la raison pour laquelle elle a été dénommée partie centrale fixe.

Les volets latéraux 22 supportent chacun un commutateur 270,280 et sont dotés d'un circuit électrique d'alimentation formant un réseau de connexion.

Plus précisément, les volets 22 comportent une enveloppe isolante, dont la face tournée à l'opposé de la face 4, est dégagée pour un libre accès audit réseau.

On notera que c'est la partie isolante des volets 22 qui donne de la rigidité au réseau de connexion, ce qui facilite ainsi le pliage à la faveur de la charnière 20.

Bien entendu on peut prévoir d'autres supports et d'autres moyens pour rigidifier le réseau de connexion, par exemple des barrettes isolantes, ou un cadre isolant.

Les réseaux de connexion ou circuits électriques, placés sous les commutateurs 270,280 et sur lesquels les contacts électriques sont établis, se prolongent jusqu'à la partie centrale fixe 21 en étant solidaires du réseau d'interconnexion 301 conformé à cet effet et dont ils constituent des prolongements.

Ainsi dans une zone préalablement définie, le réseau 301 est utilisé comme charnière 20 et peut être plié, en laissant ainsi la possibilité de positionner des manettes 170,180, appartenant respectivement aux commutateurs 270,280, selon le type du véhicule.

La face avant 41 du module 400 est réalisée de manière à rendre possible le positionnement de l'extrémité des manettes 170,180, en fonction de la profondeur du volant, et ce sont les commutateurs du véhicule concerné qui déterminent l'orientation du support d'alimentation 22.

Dans cette figure 4, on a représenté en pointillé en 23 les commutateurs, après leur adaptation en position déterminée notamment par le volant du véhicule concerné.

Suivant une autre caractéristique, des moyens de maintien et de prépositionnement relient les commutateurs 270,280 à la platine 120.

Par exemple suivant la configuration du véhicule, chaque commutateur peut être revêtu d'un habillage schématisé en 24 assurant après pliage définitif des charnières 20 la fixation du commutateur à la platine 120.

Cette fixation peut être réalisée par tous moyens appropriés, tels que vissage, collage, encliquetage, coopération de formes ou analogues et, de préférence affecte le volet fixe 21 et la partie principale de la platine 120.

En variante, c'est le boîtier 27,28, que comporte chacun des commutateurs 270,280, qui permet le maintien et le prépositionnement par rapport à la platine 120, ledit boîtier 27,28 étant conformé en conséquence pour coopérer, après pliage de la plaque 22, avec la platine 120 et de préférence avec le volet fixe 21, avec éventuellement intervention de pièces intermédiaires, telles que des cales.

Dans ce cas, la plaque 22 ne forme pas nécessairement un support pour le commutateur 270,280.

Ainsi qu'on l'aura compris, la partie mécanique et d'établissement des contacts de chaque commutateur est renfermée dans son boîtier 27,28, tandis que la partie électrique d'alimentation ou de connexion appartient aux volets latéraux 22, avec fixation des boîtiers 27,28 sur lesdits volets.

On notera que les moyens de maintien et de positionnement permettent de figer, après pliage du support d'alimentation 22 la position des commutateurs 270,280 ainsi que d'assurer leur protection.

Bien entendu la présente invention n'est pas limitée aux exemples de réalisation décrits, en particulier il est possible d'associer plusieurs commutateurs à chaque volet 22.

De même, les réseaux de connexions des volets 22, ainsi que les charnières 20 peuvent être standardisés, et selon le type de véhicule, certains commutateurs ou autres organes de commande peuvent être montés ou pas, la partie d'alimentation électrique étant commune. On peut également standardiser la zone des fusibles 30.

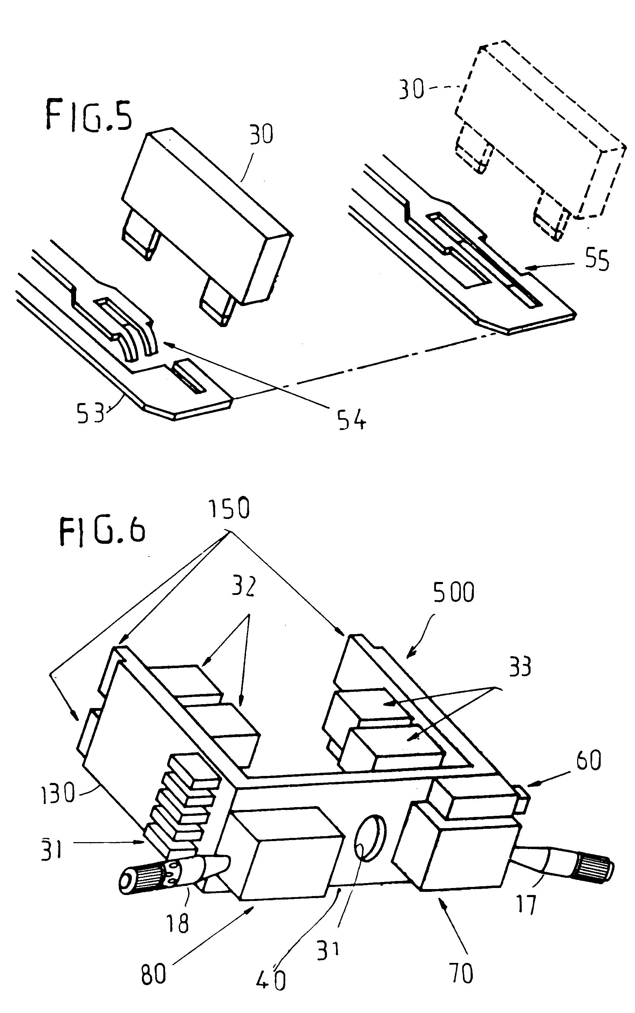

Ainsi à la figure 5, on voit en 53 la partie du réseau d'interconnexion constituant la zone des fusibles 30. La conception du circuit électrique 53 permet de prévoir la disposition et l'emplacement 55 des fusibles 30, qui seront montés sur la platine. La liaison électrique étant ou non réalisée par découpe (visible en 54) du circuit 53 lors du montage de la platine.

Le nombre de plaques 22 dépend des applications.

La partie fixe 21 peut ne pas être centrale et être décalée par rapport à une autre partie fixe comportant l'ouverture 31.

La zone de commutation ne fait pas forcément un angle de 90° (comme dans les figures 1 à 4) par rapport à la platine.

Elle peut être par exemple dans le plan de celle-ci.

En variante (figure 6) le module 500 peut être en forme de U avec deux branches 130 formant la platine, un fond 40 formant la zone de commutation. L'extrémité libre des platines 130 portent les connecteurs 150.

Ainsi le module 500 comporte donc trois zones, à savoir une première zone d'alimentation 150, une deuxième zone formée par les deux platines 130, et une troisième zone de commutation 40.

Dans ce cas, chaque platine 130 peut être spécialisée, l'une recevant en 31 les fusibles et en 32 les relais et les buzzers, tandis que l'autre reçoit en 33 des centrales, l'inter-warning 60 étant associé à la zone 40 comme précédemment.

## Revendications

1. Platine de servitude en matière isolante pour véhicule automobile du genre portant un réseau d'interconnexion électrique (11,301) pour des composants électriques, tels que des relais (90), des lampes (13) et fusibles (30), et une zone d'alimentation (5,50,150) pour alimentation du réseau d'interconnexion électrique (11,301), ladite platine étant connectée à au moins un commutateur (6,7,8,70-80) à la disposition du conducteur, caractérisée en ce que le réseau d'interconnexion électrique (11,301) est prolongé pour formation d'un circuit électrique d'alimentation (10,22) du commutateur (6,7,8,9,70-80) à partir de la zone d'alimentation (5,50), en ce que ladite platine appartient à un module intégré (2,200,300,400,500) comportant successivement une première zone, dite d'alimentation, comprenant la zone d'alimentation (5,50,150), une deuxième zone formée par la platine de servitude (1,100,110,120,130) et une troisième zone (4,40), dite zone de commutation, portant ledit commutateur et comportant ledit circuit électrique d'alimentation (10,22).

2. Platine de servitude selon la revendication 1, caractérisée en ce que ledit circuit électrique d'alimentation (10,22) est intégré à un circuit métallique conducteur prédécoupé, comportant au moins une plaque, monté dans un boîtier (3) en matière isolante appartenant audit module intégré et solidaire de ladite platine, ledit circuit prédécoupé constituant le réseau d'interconnexion (10,22).

3. Platine de servitude selon la revendication 2, caractérisée en ce que ledit circuit prédécoupé est monté par surmoulage dans le boîtier (3) en matière isolante

4. Platine de servitude selon la revendication 2 ou 3, caractérisée en ce que le circuit électrique d'alimentation (10,11) du commutateur fait un angle de 90° par rapport audit réseau d'interconnexion électrique (11).

5. Platine de servitude selon l'une quelconque des revendications 1 à 4, caractérisée en ce que le réseau d'interconnexion électrique (11,301) se termine dans la zone d'alimentation (5,50) par des fiches (14) appartenant à un dispositif de connexion.

6. Platine de servitude selon l'une quelconque des revendications 1 à 5, caractérisée en ce que la zone de commutation (40) forme la face avant de ladite platine en s'étendant globalement à 90° par rapport à celle-ci, et en ce que la zone de commutation (40) est dotée d'un passage (31) pour la colonne de direction.

7. Platine de servitude selon la revendication 6, caractérisée en ce que son extrémité libre porte au moins un connecteur (50,150) appartenant à la zone d'alimentation et venu de moulage avec ladite platine.

8. Platine de servitude selon la revendication 6 ou 7, caractérisée en ce que le module intégré (500) est en forme de U avec deux branches (130) formant la platine et un fond (40) formant la zone de commutation, l'extrémité libre des platines (130) portant des connecteurs (150).

9. Platine de servitude selon l'une quelconque des revendications 6 à 8, caractérisée en ce qu'elle porte le tableau de bord (111) du véhicule.

10. Platine de servitude selon la revendication 9, caractérisée en ce qu'elle porte un ou plusieurs connecteurs (15) de raccordement audit tableau de bord (111) stylisé en fonction du véhicule et rapporté en final.

11. Platine de servitude selon l'une quelconque des revendications 1 à 10, dans laquelle est prévu un passage (31) pour la colonne de direction, caractérisée en ce que la zone de commutation (41) comporte une partie fixe (21) reliée à au moins un support d'alimentation (22), portant un circuit électrique d'alimentation d'au moins un commutateur (270,280), par une charnière (20) appartenant au réseau d'interconnexion électrique (301).

12. Platine de servitude selon la revendication 11, caractérisée en ce que la partie fixe (21) sert de liaison électrique entre la platine (120) et ledit support d'alimentation (22).

13. Platine de servitude selon la revendication 11 ou 12, caractérisée en ce que ledit support d'alimentation (22) comporte une partie isolante donnant de la rigidité audit circuit électrique d'alimentation, formant réseau de connexion, pour faciliter ledit pliage à la faveur de ladite charnière.

14. Platine de servitude selon l'une quelconque des revendications 11 à 13, caractérisée en ce que les réseaux de connexion, placés sous le commutateur (270,280) et sur lesquels les contacts électriques sont établis, sont portés par ledit support d'alimentation (22), et en ce que lesdits réseaux de connexion se prolongent jusqu'à la partie centrale fixe (21) en étant solidaires du réseau d'interconnexion électrique (301).

15. Platine de servitude selon l'une quelconque des revendications 11 à 14, caractérisée en ce que la partie mécanique et d'établissement des contacts du commutateur (270,280) est contenue dans un boîtier (27,28) propre à être rapporté sur son support d'alimentatiion (22) associé.

16. Platine de servitude selon l'une quelconque des revendications 11 à 15, caractérisée en ce que des moyens de maintien et de prépositionnement (24) relient le commutateur (270,280) à la platine (301), après pliage de la charnière (20).

17. Platine de servitude selon la revendication 16, caractérisée en ce qu'un élément d'habillage (24) fixe, après pliage de la charnière (20), le commutateur concerné à la platine (301).

18. Platine de servitude selon la revendication 17, caractérisée en ce que le support d'alimentation (22) constitue un support pour le commutateur (270,280).

19. Platine de servitude selon l'une quelconque des revendications 11 à 18, caractérisée en ce que ladite zone de commutation (41) constitue la face avant de la platine de servitude (120) et comporte une partie centrale fixe (21) et deux plaque de circuit électrique d'alimentation et de support (22) d'au moins un commutateur (270,280) disposées de part et d'autre de la partie centrale, en étant reliées chacune par une charnière (20) appartenant au réseau d'interconnexion (301).

## Claims

1. An auxiliary panel made from insulating material for a motor vehicle of the type bearing an electric interconnecting network (11, 301) for electric components, such as relays (90), lamps (13) and fuses (30), and a power supply zone (5, 50, 150) for supplying the electric interconnecting network, the said panel being connected to at least one switching unit (6, 7, 8, 70-80) at the disposal of the driver,
**characterised in that** the electric interconnecting network (11, 301) is extended to form a power feed circuit (10, 22) of the switching unit (6, 7, 8, 9, 70 - 80) from the power supply zone (5, 50),
**in that** the said panel belongs to an integrated module (2, 200, 300, 400, 500) comprising successively a first zone, known as the power supply zone, comprising the power supply zone (5, 50, 150), a second zone formed by the auxiliary panel (1, 100, 110, 120, 130) and a third zone (4, 40), known as the switching zone, bearing the said switching unit and comprising the said power feed circuit (10, 22).

2. An auxiliary panel according to Claim 1,
**characterised in that** the said power feed circuit (10, 22) is integrated with a scored conductive metal circuit, comprising at least one plate, mounted in a casing (3) made from insulating material belonging to said integrated module and integral with said panel, the said scored circuit forming the interconnecting network (10, 22).

3. An auxiliary panel according to Claim 2,
**characterised in that** the said scored circuit is mounted by insert moulding in the casing (3) made from insulating material.

4. An auxiliary panel according to Claim 2,
**characterised in that** the power feed supply circuit (10, 11) of the switching unit makes an angle of 90° in relation to said electric interconnecting network (11).

5. An auxiliary panel according to any one of Claims 1 to 4,
**characterised in that** the electric interconnecting network (11, 301) ends in the power supply zone (5, 50) by plugs (14) belonging to a connection device.

6. An auxiliary panel according to any one of Claims 1 to 5,
**characterised in that** the switching zone (40) forms the front face of said panel whilst extending generally at 90° in relation thereto,
**and in that** the switching zone (40) is equipped with a passage (31) for the steering column.

7. An auxiliary panel according to Claim 6,
**characterised in that** its free end bears at least one connector (50, 150) belonging to the power supply zone and integrally moulded with said panel.

8. An auxiliary panel according to Claim 6 or 7,
**characterised in that** the integrated module (500) is in a U shape with two branches (130) forming the panel and a base (40) forming the switching zone, the free end of the panels (130) bearing connectors (150).

9. An auxiliary panel according to any one of Claims 6 to 8,
**characterised in that** it bears the instrument panel (111) of the vehicle.

10. An auxiliary panel according to Claim 9,
**characterised in that** it bears one or more connectors (15) to said instrument panel (111) stylised as a function of the vehicle and finally attached.

11. An auxiliary panel according to any one of Claims 1 to 10, in which is provided a passage (31) for the steering column,
**characterised in that** the switching zone (41) comprises a fixed part (21) connected to at least one power supply support (22), bearing a power feed circuit of at least one switching unit (270, 280), by a hinge (20) belonging to the electric interconnecting network (301).

12. An auxiliary panel according to Claim 11,
**characterised in that** the fixed part (21) is used as an electrical connection between the panel (120) and the said power supply support (22).

13. An auxiliary panel according to Claim 11 or 12,
**characterised in that** the said power supply support (22) comprises an insulating part imparting rigidity to the said power feed circuit, forming a connecting network, in order to facilitate the safe bending by means of said hinge.

14. An auxiliary panel according to any one of Claims 11 to 13,
**characterised in that** connection networks, which are placed beneath the switching units (270, 280) and on which the electric contacts are established, are borne by the said power supply support (22),
**and in that** the said connecting networks are extended as far as the fixed central part (21) whilst being integral with the electric interconnecting network (301).

15. An auxiliary panel according to any one of Claims 11 to 14,
**characterised in that** the mechanical part and the contact establishing part of the switching unit (270, 280) is contained in a casing (27, 28) which can be attached on its associated power supply support (22).

16. An auxiliary panel according to any one of Claims 11 to 15,
**characterised in that** retention and prepositioning means (24) connect the switching unit (270, 280) to the panel (301), after bending the hinge (20).

17. An auxiliary panel according to Claim 16,
**characterised in that** a covering element (24) fixes, after bending the hinge (20), the switching unit concerned to the panel (301).

18. An auxiliary panel according to Claim 17,
**characterised in that** the power supply support (22) forms a support for the switching unit (270, 280).

19. An auxiliary panel according to any one of Claims 11 to 18,
**characterised in that** the said switching zone (41) forms the front face of the auxiliary panel (120) and comprises a fixed central part (21) and two plates (22), one for the power feed circuit and one for support, of at least one switching unit (270, 280) disposed on either side of the central part, each being connected by a hinge (20) belonging to the interconnecting network (301).

## Patentansprüche

1. Hilfsplatine aus nichtleitendem Material für Kraftfahrzeuge mit einem daran angebrachten elektrischen Anschlußnetz (11, 301) für elektrische Bauteile, wie etwa Relais (90), Leuchten (13) und Sicherungen (30), sowie einem Stromzufuhrbereich (5, 50, 150) für die Stromversorgung des elektrischen Anschlußnetzes (11, 301), wobei die Platine an mindestens einen, dem Fahrer zur Verfügung stehenden Schalter (6, 7, 8, 70-80) angeschlossen ist , **dadurch gekennzeichnet,** daß das elektrische Anschlußnetz (11, 301) zur Ausbildung eines Speisestromkreises (10, 22) für die Stromversorgung des Schalters (6, 7, 8, 9, 70-80) von dem Stromzufuhrbereich (5, 50) aus verlängert ist, daß die genannte Platine zu einem integrierten Modul (2, 200, 300, 400, 500) gehört, das nacheinander einen ersten Bereich für die Stromversorgung mit dem Stromzufuhrbereich (5, 50, 150), einen zweiten, aus der Hilfsplatine (1, 100, 110, 120, 130) bestehenden Bereich und einen dritten Bereich (4, 40) umfaßt, der als Schaltbereich bezeichnet wird, an dem sich der genannte Schalter befindet und der den Speisestromkreis (10, 22) enthält.

2. Hilfsplatine nach Anspruch 1, **dadurch gekennzeichnet,** daß der Speisestromkreis (10, 22) in einen vorgestanzten, leitenden metallischen Stromkreis integriert ist, der mindestens eine Platte umfaßt, die in einem Gehäuse (3) aus nichtleitendem Material eingebaut ist, das zu dem integrierten Modul gehört und fest mit der Platine verbunden ist, wobei der vorgestanzte Stromkreis das Anschlußnetz (10, 22) bildet.

3. Hilfsplatine nach Anspruch 2, **dadurch gekennzeichnet,** daß der vorgestanzte Stromkreis durch Aufformung in dem Gehäuse (3) aus nichtleitendem Material eingesetzt wird.

4. Hilfsplatine nach Anspruch 2 oder 3, **dadurch gekennzeichnet,** daß der Speisestromkreis (10, 11) des Schalters einen Winkel von 90° im Verhältnis zu dem elektrischen Anschlußnetz (11) bildet.

5. Hilfsplatine nach einem der Ansprüche 1 bis 4 , **dadurch gekennzeichnet,** daß das elektrische Anschlußnetz (11, 301) in dem Stromzufuhrbereich (5, 50) mit Steckern (14) endet, die zu einer Anschlußvorrichtung gehören.

6. Hilfsplatine nach einem der Ansprüche 1 bis 5 , **dadurch gekennzeichnet,** daß der Schaltbereich (40) die Vorderseite der genannten Platine bildet, wobei er sich ingesamt in einem Winkel von 90° im Verhältnis zu dieser erstreckt, und daß der Schaltbereich (40) mit einem Durchgang (31) für die Lenksäule versehen ist.

7. Hilfsplatine nach Anspruch 6 , **dadurch gekennzeichnet,** daß ihr freies Ende mindestens einen Verbinder (50, 150) trägt, der zu dem Stromzufuhrbereich gehört und formschlüssig mit der genannten Platine ausgeführt ist.

8. Hilfsplatine nach Anspruch 6 oder 7, **dadurch gekennzeichnet,** daß das integrierte Modul (500) in U-Form mit zwei Schenkeln (130) ausgeführt ist, welche die Platine bilden, sowie mit einem Boden (40), der den Schaltbereich bildet, wobei an dem freien Ende der Platinen (130) Verbinder (150) angebracht sind.

9. Hilfsplatine nach einem der Ansprüche 6 bis 8 , **dadurch gekennzeichnet,** daß sie das Armaturenbrett (111) des Fahrzeugs trägt.

10. Hilfsplatine nach Anspruch 9, **dadurch gekennzeichnet,** daß sie einen oder mehrere Verbinder (15) für den Anschluß an das Armaturenbrett (111) trägt, das in Abstimmung auf das Fahrzeug gestaltet und abschließend angesetzt wird.

11. Hilfsplatine nach einem der Ansprüche 1 bis 10, in der ein Durchgang (31) für die Lenksäule vorgesehen ist, **dadurch gekennzeichnet,** daß der Schaltbereich (41) einen feststehenden Teil (21) umfaßt, der mit mindestens einem Stromzufuhrträger (22) mit einem darauf befindlichen Speisestromkreis für mindestens einen Schalter (270, 280) durch ein Scharnier (20) verbunden ist, das zu dem elektrischen Anschlußnetz (301) gehört.

12. Hilfsplatine nach Anspruch 11 , **dadurch gekennzeichnet,** daß der feststehende Teil (21) als elektrische Verbindung zwischen der Platine (120) und dem Stromzufuhrträger (22) dient.

13. Hilfsplatine nach Anspruch 11 oder 12 , **dadurch gekennzeichnet,** daß der Stromzufuhrträger (22) einen isolierenden Teil umfaßt, welcher dem Speisestromkreis, der das Anschlußnetz bildet, Festigkeit gibt, um das Umbiegen anhand des genannten Scharniers zu erleichtern.

14. Hilfsplatine nach einem der Ansprüche 11 bis 13, **dadurch gekennzeichnet,** daß die unter dem Schalter (270, 280) angeordneten Anschlußnetze, an denen die elektrischen Kontakte hergestellt werden, an dem Stromzufuhrträger (22) angebracht sind und daß sich diese Anschlußnetze bis zu dem feststehenden Mittelteil (21) erstrecken, wobei sie fest mit dem elektrischen Anschlußnetz (301) verbunden sind.

15. Hilfsplatine nach einem der Ansprüche 11 bis 14, **dadurch gekennzeichnet,** daß der mechanische und für Herstellung der Kontakte des Schalters (270, 280) vorgesehene Teil in einem Gehäuse (27, 28) enthalten ist, das sich für das Ansetzen an seinem zugehörigen Stromzufuhrträger (22) eignet.

16. Hilfsplatine nach einem der Ansprüche 11 bis 15, **dadurch gekennzeichnet,** daß der Schalter (270, 280) mit der Platine (301) nach dem Umbiegen des Scharniers (20) durch Halte- und Voreinstellmittel (24) verbunden ist.

17. Hilfsplatine nach Anspruch 16 , **dadurch gekennzeichnet,** daß ein Verkleidungselement (24) den betreffenden Schalter nach dem Umbiegen des Scharniers (20) an der Platine (301) befestigt.

18. Hilfsplatine nach Anspruch 17 , **dadurch gekennzeichnet,** daß der Stromzufuhrträger (22) einen Träger für den Schalter (270, 280) bildet.

19. Hilfsplatine nach einem der Ansprüche 11 bis 18, **dadurch gekennzeichnet,** daß der Schaltbereich (41) die Vorderseite der Hilfsplatine (120) bildet und einen feststehenden Mittelteil (21) sowie zwei Speisestromkreis- und Trägerplatten (22) für mindestens einen Schalter (270, 280) umfaßt, die beiderseits des Mittelteils angeordnet sind, wobei sie durch ein Scharnier (20) miteinander verbunden sind, das zu dem Anschlußnetz (301) gehört.
